# EUROPEAN PATENT SPECIFICATION

(11) **EP 1 552 899 B1**
(45) Date of publication and mention of the grant of the patent: **22.08.2018**
(21) Application number: 02767987.7
(22) Date of filing: 20.09.2002
(51) Int. Cl.: B23D 35/00, B23Q 3/155, B26D 1/22, B26D 7/26

(54) **CUTTING EDGE CHANGING DEVICE IN SLITTER STAND AND CUTTING EDGE CHANGING METHOD**
SCHNEIDKANTENWECHSELVORRICHTUNG IN EINER SCHLITZMASCHINENSTATION UND SCHNEIDKANTENWECHSELVERFAHREN
DISPOSITIF DE CHANGEMENT D'ARETE DANS UN SUPPORT DECOUPEUR ET PROCEDE DE CHANGEMENT D'ARETE

(43) Date of publication of application: 13.07.2005
(73) Proprietor: Nippon Steel & Sumikin Texeng. Co., Ltd., Chiyoda-ku Tokyo (JP)
(72) Inventor: FURUI, Koji, Himeji-shi, Hyogo 671-1155 (JP)
(74) Representative: Eisenführ Speiser
(86) International application number: PCT/JP2002/009665
(87) International publication number: WO 2004/026514

(56) References cited:
- WO-A1-96/09145
- JP-A- 57 015 616
- JP-A- 2000 084 884
- JP-A- 2002 160 189
- JP-U- 5 039 888
- JP-U- 58 004 319
- US-A- 3 503 293

## Description

### TECHNICAL FIELD

The present invention relates to a device for changing cutting edges in a slitter stand and a method for changing cutting edges. More particularly, the present invention relates to the device for changing cutting edges and method for changing cutting edges of upper slitter stand rotation axes and lower slitter stand rotation axes of the slitter stand as per the preamble of claims 1 and 12 respectively. Document JP 2002 160 189 A discloses examples of this kind of devices and methods. These devices and methods shear a coiled form of the broad-wide material into a plurality of slit ribbons by catching the coiled form of the broad-wide material between the upper slitter stand rotation axes and lower slitter stand rotation axes. As for the coiled form of the broad-wide materials, there can be employed a metal such as steel, aluminum or copper and polymeric films such as vinyl chloride resins or polyethylene resins.

### BACKGROUND ART

In an operation in which the coiled form of the broad-wide material is cut into a plurality of slit ribbons by catching the broad-wide material between the upper slitter stand rotation axes and lower slitter stand rotation axes through the slitter stand, in the case of changing the slit width or materials, the cutting edges need to be frequently changed, since upper and lower cutting tool axes are required to be changed in such a manner as to be a predetermined width of round edge knife disks and gap between round edge knife disks which are determined in accordance with materials.

Round edge knife disks locating parts which adjust the space of round edge knife disks on the slitter stand rotation axes are usually employed by a combination of ring spacers having different thickness, and more than a hundred kinds of spacers having different thickness may be required. Thus, the number of positioning components for the round edge knife disks is large, however, changing operation for the slitter stand rotation axes is required to be carried out in a short time.

As for a method to reduce the time for changing operation there has been a known method to change the slitter stand rotation axes in a short time through preassembling upper and lower slitter stand rotation axes being used in next. However, several numbers of people are required in the case of carrying out by manual labor.

As for a prior art to save labor for changing cutting edges, there is disclosed an art in such as Japanese Unexamined Patent Publication No. 63098/1987 and Japanese Unexamined Patent Publication No. 19819/1999. It is disclosed that the device for changing cutting edges transfers the round edge knife disks and spacers which are the components for positioning the round edge knife disks to the predetermined position from a custody warehouse one by one through such as a robot.

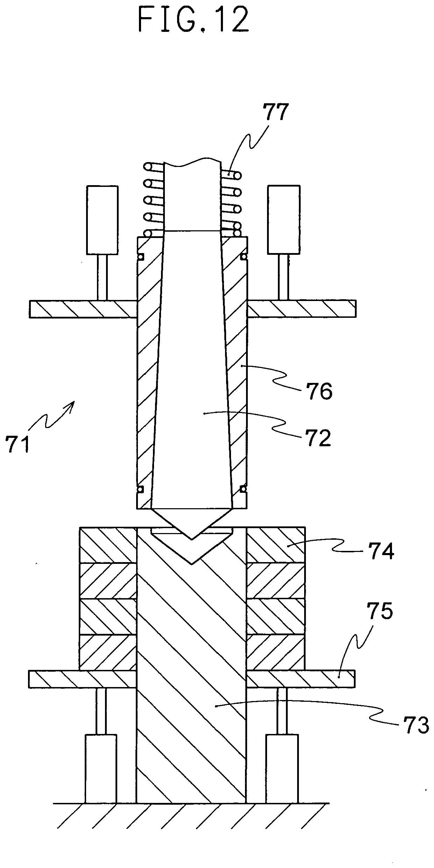

Furthermore, in Japanese Unexamined Patent Publication No. 127079/2000, there is disclosed an art to reduce the time for pre assembling through holding a plurality of round edge knife disks and spacers, and transferring them to a pre assembly position from the custody warehouse by a robot as shown in Fig. 12. In other words, according to the device as shown in Fig. 12, a tapered core bar 72 provided on an end 71 of a robot arm is connected to a round rod 73. The round edge knife disks 74 including such as the round edge knife disks and/or round edge knife disks locating parts are transferred to the core bar 72 through pushing the round edge knife disks 74 by a plate 75. An outer cover 76 being provided periphery of the core bar 72 temporarily moves upward while pushing a spring 77, and is able to retain internal diameter of the round edge knife disk 74 when returning downward by restoring forces of the spring 77.

However, there has been a problem that the method, which individually transfers the round edge knife disks and spacers being as the round edge knife disks locating parts to the temporary assemble position from the custody warehouse as described in Japanese Unexamined Patent Publication No. 63098/1987 and Japanese Unexamined Patent Publication No. 19819/1999. The method which uses the robot takes more time to transfer the round edge knife disks and spacers than using manual labor when there are a number of components.

The invention described in Japanese Unexamined Patent Publication No. 127079/2000 enables to reduce the transferring time, since a plurality of round edge knife disks and round edge knife disks locating parts can be combined and transferred. However, there have been problems of complex controls and maintenance, since pushing mechanisms are individually provided for a storing equipment of round edge knife disks and round edge knife disks locating parts. In addition, a holding device for holding the round edge knife disks and round edge knife disks locating parts from inside has a special form.

An object of the present invention is to attain laborsaving through providing the device and method for changing cutting edges in the slitter stand which enable to replace the cutlery shaft in the slitter stand in a short time with a simple device arrangement.

### DISCLOSURE OF INVENTION

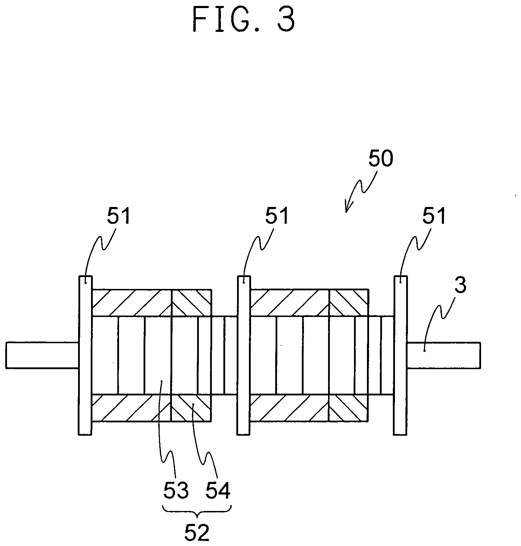

The present invention provides a device as per claim 1 and a method as per claim 12. Additional preferred embodiments are defined by the dependent claims. The components for positioning the round edge knife disk are components, which adjust the interval of the round edge knife disks being provided on the slitter stand rotation axes as shown in Fig. 3, and are ring spacers being made from steel or the spacers which are further provided with a cushioning material such as rubber.

### BRIEF DESCRIPTION OF DRAWINGS

Fig. 1 is a plan view of the slitter including a device for changing cutting edges in accordance with one Embodiment of the present invention;
Fig. 2 is a front view of the slitter of Fig. 1;
Fig. 3 is a cross-sectional explanation view which shows a slitter cutter set being provided on the slitter stand rotation axes of Fig. 1;
Fig. 4 is an explanation view of a robotic hand of Fig. 1;
Fig. 5 is a perspective explanation view showing a state just before a plurality of round edge knife disks are held by the robotic hand of Fig. 1;
Fig. 6 is an enlarged perspective view of a main portion of the robotic hand of Fig. 1;
Fig. 7 is a front view of the slitter including temporary putting shafts as another example of the slitter to which the device for changing cutting edges of the present invention can be applied;
Fig. 8 is a plan view of the slitter of Fig. 7;
Fig. 9 is a plan view showing a pattern of the slitter including the device for changing cutting edges in accordance with still another Embodiment of the present invention;
Fig. 10 is a plan view schematically showing a state which two sets of handling robots being employed for the device for changing cutting edges of the present invention are disposed;
Fig. 11 is a plan view schematically showing a state which four sets of handling robots being employed for the device for changing cutting edges of the present invention are disposed; and
Fig. 12 is an enlarged cross-sectional view of a holding part of the conventional device for changing cutting edges.

### BEST MODE FOR CARRYING OUT THE INVENTION

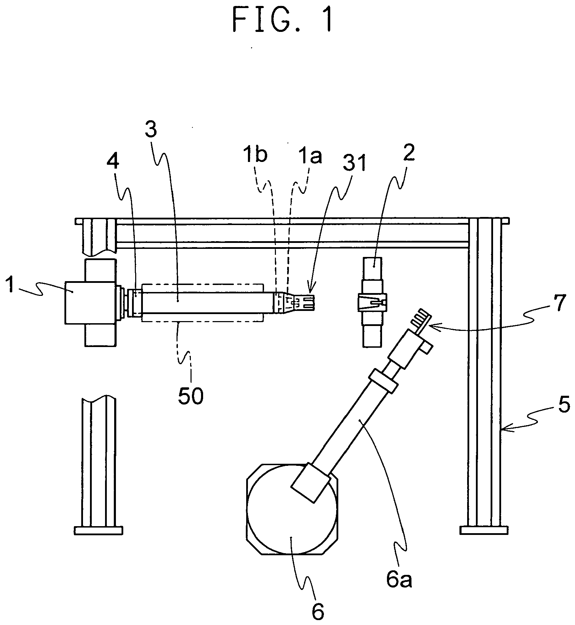

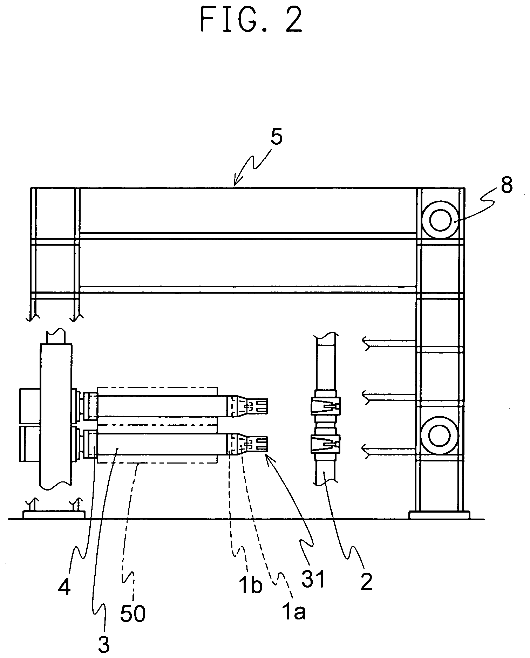

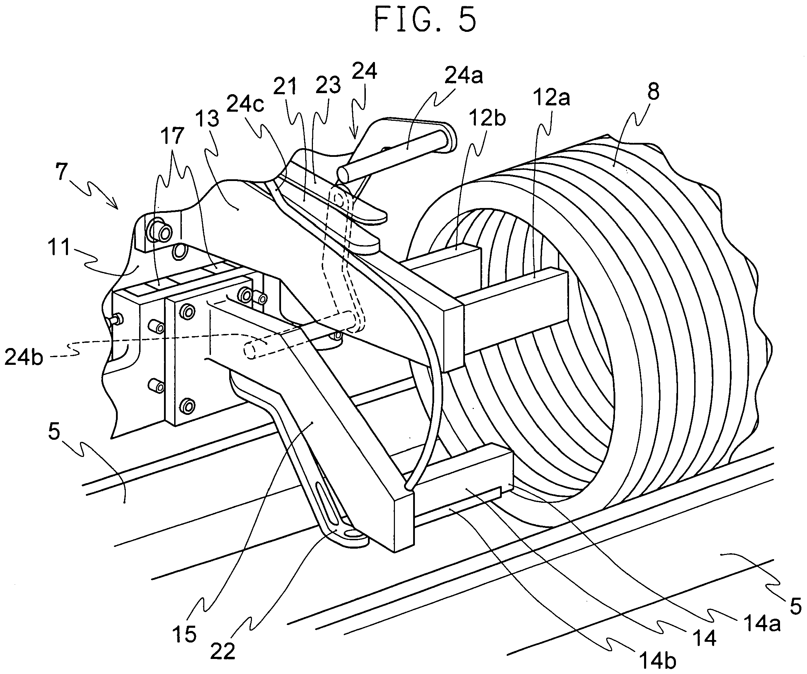

Figs. 1 and 2 show a state in which a main body of slitter 1 is pulled out to off-line for changing the cutting edges, and a bearing 2 of an anti-driving side is removed from the slitter stand rotation axes 3 which are a pair of upper and lower slitter stand rotation axes. A guide sleeve 4 having substantially the same internal diameter of the round edge knife disks 8 including such as the round edge knife disks and/or round edge knife disks locating parts is provided at the driving side of the slitter stand rotation axes. A cap 31 is provided on an end of the anti-driving side of the slitter stand rotation axes. A custody warehouse for storing the round edge knife disks 8 in accordance with classified groups and a general-purpose handling robot 6 are provided periphery of the slitter. In the case there are many varieties or numbers of the round edge knife disks, the custody warehouse is composed of a plurality of shelves in order to reduce a floor space and distance of transportation. The storage rack is provided with at least a pair of rails whose opposing surfaces are tapered such that the interval of the opposing surfaces become wider as they are close to upward, thereby the round edge knife disks can be stored substantially vertical as shown in Fig. 5. The above-mentioned arrangement is advantageous from a perspective of saving the space and handling by the robotic hand which will be mentioned in following.

The general-purpose handling robot 6 is composed of a robotic hand 7 which is able to hold a plurality of round edge knife disks 8, and an articulated robot arm 6a which is able to transfer the round edge knife disks 8 to the upper and lower slitter stand rotation axes 3 or the predetermined position such as temporary assembly shafts, which will be mentioned in following, from the storing position.

The round edge knife disk 8 has a ring shape so as to be installed on the slitter stand rotation axes 3 having a columnar shape.

The round edge knife disks 51 and spacers 53 have the same internal diameter, however, the round edge knife disks have the larger external diameter than the external diameter of the spacers. A rubber ring 54 being provided on the spacers 53 has the smaller external diameter than the external diameter of the round edge knife disks, however, its internal diameter is substantially same as the external diameter of the spacers 53. In the case a plurality of round edge knife disks 51 and spacers 53 are combined and transferred, it is possible to hold them from either outside or both inside and outside. However, in the case a plurality of round edge knife disks and spacer are held, the shape of robotic hand and control of movement become complex, since the round edge knife disks 51 and spacers 53 have different external diameter. It is most advantageous to hold round edge knife disks 51 and spacers 53 from inside by the robotic hand, since the round edge knife disks 51 and spacers 53 have the same internal diameter, and it is also possible to transfer them with the rubber ring 54 being provided on the spacer 53 which will be mentioned in following.

The number of the round edge knife disks to be built into the upper and lower cutting tool axes and combination of the round edge knife disks locating parts are determined based on the interval of the round edge knife disks and clearance between the round edge knife disks which are determined the materials to be cut in the next and slit width. In Figs. 1 and 2, the robotic hand 7 holds the round edge knife disks 8 including such as the round edge knife disks and/or round edge knife disks locating parts being stored in the storage rack 5 from inside by combining a plurality of the round edge knife disks 8 with an order to assemble on the slitter stand rotation axes or temporary assembly putting shafts based on the above-mentioned combination. The round edge knife disks are then transferred to the respective upper and lower slitter stand rotation axes or temporary assembly putting shaft, and the predetermined slitter cutter set 50 (see Fig. 3) is assembled.

In the case of returning the round edge knife disks 8 of the slitter cutter set 50 being previously used to the storing position of the storage rack 5 from the slitter stand rotation axes 3 or a receipt shaft 65, which will be mentioned in following, by employing the robotic hand 7, it is also possible to transfer a plurality of the round edge knife disks with being combined.

In Fig. 3, an example of the slitter cutter set 50 being installed on the slitter stand rotation axes 3 is shown. The slitter cutter set 50 is composed of a plurality of the round edge knife disks 51 and round edge knife disks locating parts 52 for retaining the predetermined interval between two adjacent round edge knife disks 51.

The round edge knife disks locating parts 52 are composed of the spacers 53 and at least one cushioning material 54 such as the rubber ring having a hollowcyrindrical shape and being provided on the spacer 53. The purpose of the cushioning material 54 such as rubber ring are such as 1. to prevent cutter mark by a corner of the round edge knife disks located opposing side of cutting side, 2. to prevent a plate located between the round edge knife disks from curving - the width of the plate after being cut becomes slightly wider in case the plate between the round edge knife disks is curved, 3. to prevent the plate after being shorn from being caught between the round edge knife disks, and 4. to pinch the plate and give thrust to the plate. For example, when the object of 1 which is to prevent the cutter mark is focused, a cushioning material having a larger external diameter than the diameter of round edge knife disks is assembled for preventing the coiled material from contacting with the opposing corner of the round edge knife disks when shearing the coiled material.

In order to prevent the surface of the product from being damaged by contacting with the round edge knife disks, the cushioning material is preferably made with a material which hardly gives damage when the product after being shorn is brought contact with the round edge knife disks. The components for positioning round edge knife disks 52 may only be composed of a plurality of spacers 53, in the case cutting materials whose surface damage is not an issue. With respect to the cushioning material being as consumables, the damaged cushioning material can be easily replaced individually by removing the cushioning material at each time of changing the cutting edges. However, since the number of components is increased, the cushioning material can be fixed in such a manner as to be integrated with the outside of the spacers.

An example of a method to determine the slitter cutter set (the width and number of the round edge knife disks, the width and number and order of assembly of the spacers, the width and number of rubber ring provided on the spacer) from the material to be cut in the next and slit width will now be explained.

For example, the following materials are respectively stored in the storage rack in advance.
1. 0.1 mm distance spacers for adjustment: width; 9.1 to 9.9 mm
2. 1 mm spacers for adjustment: width; 11 to 19 mm
3. spacers for width adjustment: two kinds of width; 10 mm and 50 mm
4. rubber ring: two kinds of width; 20 mm and 50 mm
When the thickness of the round edge knife disks is 10 mm, clearance is 0.15 mm and slit width is 100 mm, the interval of the upper round edge knife disks is set to be 100 mm, which is substantially same as the slit width so as to contact with the outside of the slit width. On the other hand, the interval of the lower round edge knife disks is required to be set as 79.7 mm, which is derived from the subtraction of the thickness of the above-mentioned two round edge knife disks and respective clearance from slit width of 100 mm, so as to be included inside the slit width.

In order to obtain the interval (100 mm) of the upper round edge knife disks, there can be employed two 50 mm spacers for width adjustment of 3, or a combination of one 50 mm rubber ring of 4 + two of 20 mm rubber rings of 4.

In order to obtain the interval (79.7 mm) of the lower round edge knife disk, there can be employed a combination of one 50 mm spacer for width adjustment of 3 + two 10 mm spacers for width adjustment of 3 + one spacer (width of 9.7 mm) of 1, or a combination of 50 mm rubber ring of 4 + one 20 mm rubber ring of 1.

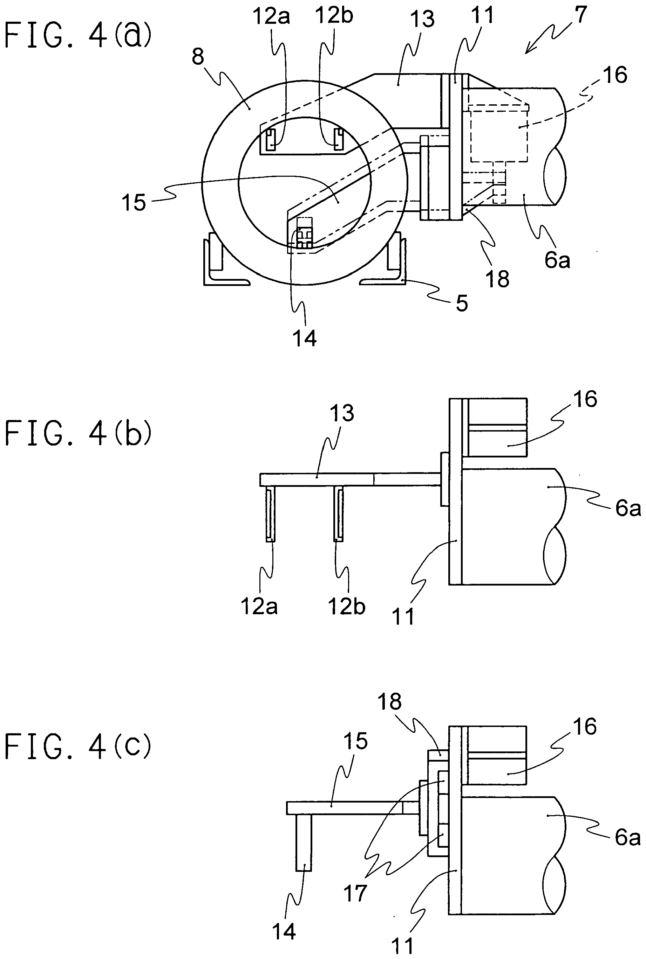

Fig. 4 shows a partial section of the robotic hand 7 and the storage rack 5 of the present Embodiment. The method for holding the round edge knife disks 8 of the present invention is to hold from their internal diameter which is superior with respects such as the transportation position with other equipment and holding strength.

As shown in Fig. 4, a base plate 11 of the robotic hand 7 is provided on an end of the arm 6a of the handling robot 6, and an upper finger frame 13 having two stationary type fingers 12a and 12b is fixed to the base plate 11. A lower finger frame 15 having one finger 14 is provided in such a manner that the lower finger frame is movable upward and downward along two rails 17 provided on the base plate 11. Furthermore, an air cylinder 16 is connected to the lower finger frame 15 through a connecting part 18, and the lower finger 14 and lower finger frame 15 can be transferred upward and downward through driving the air cylinder 16.

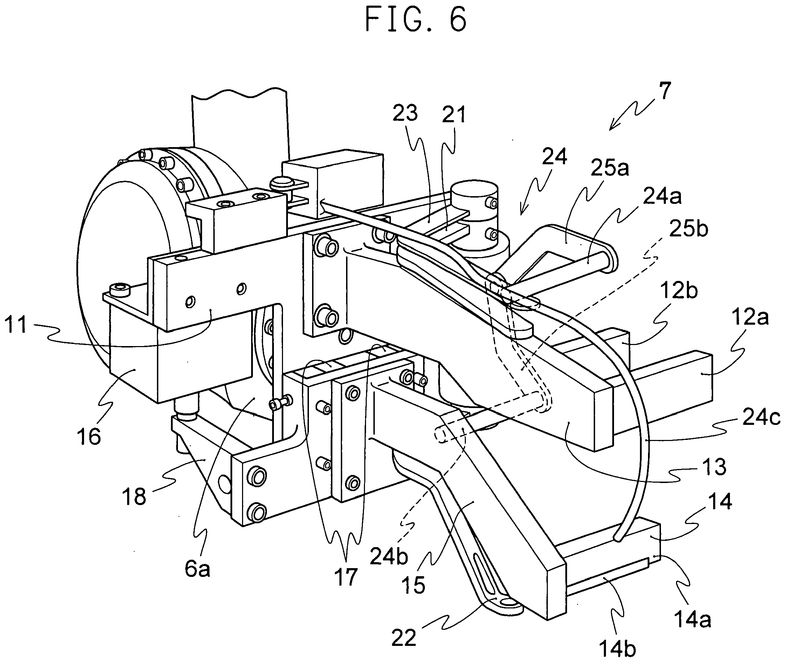

Furthermore as shown in Figs. 5 and 6, the robotic hand 7 of the present Embodiment is provided with a spacer pusher upper lever 21 for pushing the spacer in axial direction, spacer pusher lower lever 22, rubber ring suppression 23 for pushing the above-mentioned rubber ring as the cushioning material 54 and rubber ring holder 24 for preventing the rubber ring from swing while moving the hand besides three fingers 12a, 12b and 14.

The rubber ring holder 24 includes a pair of stick bars 24a and 24b for catching the rubber ring from periphery, and an arm 24 whose end is bent in circular shape to hold a part of periphery of the rubber ring. The pair of stick bars 24a and 24b is fixed to ends of a pair of link arms 25a and 25b and is able to open and close by a driving source (not shown) provided on the robotic hand 7. The arm 24c can move forward and backward between the front side and backside of the upper finger frame 13 by the driving source (not shown) provided on the robotic hand 7. Accordingly, the rubber ring which is provided on the spacer 53 being held from internal diameter by the finger 12a, 12b and 14, is also held from periphery by the pair of stick bars 24a and 24b, thereby the rubber ring does not swing or drop while being transferred.

A protrusion 14a is formed at the leading edge of a part with which the internal diameter of the respective round edge knife disks 8 of three fingers 12a, 12b and 14 are brought in contact. The round edge knife disks 8 of the leading edge are tightly held, and the round edge knife disks being internally located from the leading edge are lightly held through an elastic member 14b such as rubber.

Following procedure is carried out in the case of providing a plurality of round edge knife disks 8 on the main body of slitter 1 through employing the handling robot 6 including the robotic hand 7 of the present Embodiment.

As shown in Figs. 5 and 6, the three fingers 12a, 12b and 14 are entered to the internal diameter portion of the round edge knife disks 8 which are set up perpendicularly to the storage rack 5 and provided at the predetermined number and order through driving the arm 6a of the above-mentioned handling robot 6. Then, the upper fingers 12a and 12b are brought in contact with the internal diameter of the round edge knife disks 8 by slightly moving the arm 6a of the handling robot upward. The lower finger 14 and lower finger frame 15 are then transferred to outward of radial direction of the round edge knife disk 8, in other words transferred to downward through driving an air cylinder 16, the internal diameter of the plurality of the round edge knife disk 8 is well-balanced and tightly held at three places.

In specific, as shown in Fig. 4, when the round edge knife disks 8 are held from inside by the three fingers 12a, 12b and 14, the three fingers 12a, 12b and 14 are located at substantially the same distance from the center of the plurality of the round edge knife disks 8, thereby the plurality of round edge knife disks 8 are held in a well-balanced manner.

As shown in Fig. 1, a plurality of round edge knife disks 8 are transferred to the end of the slitter stand rotation axes 3 by moving the arm 6a of the handling robot 6. The plurality of round edge knife disks 8 are engaged with the guide cap 31 through entering to the guide cap 31 being provided on the end of the slitter stand rotation axes 3. The plurality of round edge knife disks 8 being held are then released and hung down from the upper fingers 12a and 12b by moving the lower finger 14 and lower finger frame 15 upward through driving the air cylinder 16 as shown in Fig. 4. The hand is then slightly moved down through operating the robot, and the round edge knife disk 8 are hung down from the guide cap. The hand is then moved in the axial direction of the guide cap so as to release the fingers 12a, 12b and 14. The installation of the plurality of the round edge knife disks 8 is completed.

The round edge knife disks 8 being composed of the slitter cutter set 50 as shown in Fig. 3 can be installed through one operation by holding the round edge knife disks 8 at one time by the robotic hand, or installed through a plurality of operations.

In the case of removing the round edge knife disks 8 from the slitter stand rotation axes 3, it can be completed by operating the above-mentioned operation in a reverse order.

Since the robotic hand 7 of the present Embodiment holds the round edge knife disks 8 from inside, it is possible to tightly hold the round edge knife disks 8 without damaging their outer surface. As a result, it is possible to operate the handling robot with high speed.

Furthermore, the robotic hand 7 of the present Embodiment is characterized in that its finger is able to hold a plurality of the round edge knife disks at one time. The number of the round edge knife disks to be held at one time can be easily adjusted through the length of the fingers, 12a, 12b and 14.

The plurality of the round edge knife disks 8 are arranged on the storage rack 5 such that the round edge knife disks of the same width and the spacers of the same width are grouped together as shown in Fig. 5. In accordance with the schedule of installation of the round edge knife disks being installed in the slitter stand rotation axes 3, the required round edge knife disks or spacers are selected. The robotic hand 7 is moved to respective disposing positions, and holds the round edge knife disks one after another in the above-mentioned manner, and then installs them in the slitter stand rotation axes 3 together. Accordingly, compared with the prior art in which respective round edge knife disks 8 are installed in the slitter stand rotation axes 3, efficiency in operation is greatly improved.

Furthermore, the robotic hand 7 of the present Embodiment holds only the internal diameter portion of the round edge knife disks 8 and is able to release the external diameter portion and side portion of the round edge knife disks 8. The rubber rings being provided outside of the spacers are grouped in accordance with their thickness, and a plurality of rubber rings are disposed on the storage rack 5 (see Fig. 4), and then the required rubber ring is selected. The robotic hand 7 is moved to the disposing position, and the robotic hand 7, which is holding the spacers, is provided with the rubber ring on its outside by inserting the spacers into the internal diameter of the rubber ring. Then, the robotic hand 7 is able to install the spacers and rubber rings on the slitter stand rotation axes 3 together by holding from outside through the rubber holders 24a and 24b, therefore, efficiency in operation is further improved.

In Embodiment of the present invention, the robotic hand including three fingers is illustrated as an example of a robotic hand. However, the present invention is not limited to this arrangement, and number and shape of the finger for the robotic hand can be properly modulated as long as the internal diameter of the round edge knife disks can be held by at least three places in a balanced manner.

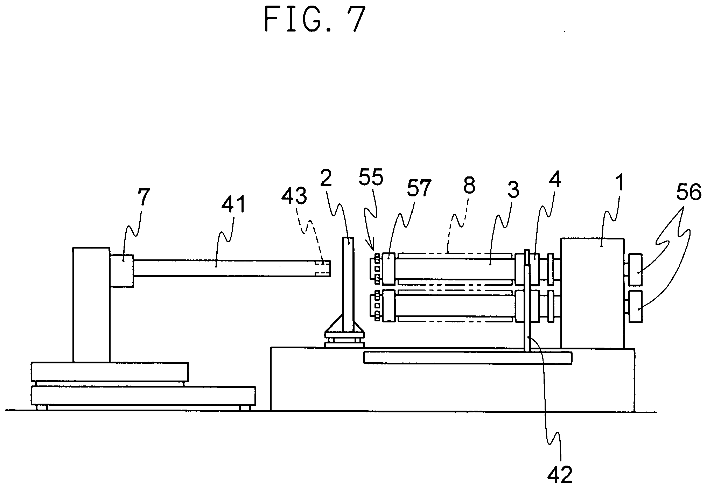

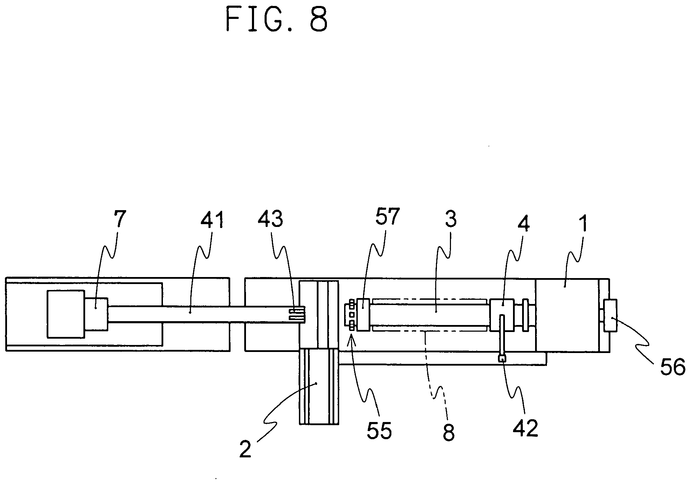

It is possible to automate the series of operation for changing the cutting edges through providing a clamping mechanism 55 (see Figs. 7 and 8) for fixing the round edge knife disks 8 including such as the round edge knife disks and round edge knife disks locating parts to the upper and lower slitter stand rotation axes 3 on end opens which are located at the anti-driving side of the upper and lower slitter stand rotation axes 3. The clamping mechanism can be employed an arrangement in which the round edge knife disks can be projected or retracted by retracting the protrusions provided on the periphery surface of the clamping mechanism through operating by pushing an operating protrusion on axial end of the clamping mechanism by employing the protrusion provided on the robotic hand or temporary putting shaft, for example. It is also possible to employ the arrangement in which a ring shaped member provided on the periphery surface of the clamping mechanism is projected or retracted.

As for a method to control the robotic hand, there can be adopted a method which employs the known prior art. For example, approximately 1000 round edge knife disks are stored on the storage rack in advance. Several numbers of operating points are required to be recognized for handling of one round edge knife disk, and a robot is required to be recognized several thousands of operating points. It is realistically impossible to teach each point by manually operating the robot. Therefore, the robot is taught one to three points per one kind of storage work, and other points are figured out by interpolating or extrapolating through calculations. In such a case, automatic teaching is still preferable, since teaching points are approximately 100 points.

Automatic teaching is, for example, carried out in a following manner. Firstly, the required points being derived from dimensions on mechanical drawings of the storage rack and robotic hand are stored in the robot. The robot approaches the shelf based on the data. Then, the difference between values of the drawings and full dimension is measured by a distance meter being provided on the robotic hand and stored. The handling operation in the future is carried out through adjusting the measured differences to the values of mechanical drawings, and the point to which the robot is moved is figured out.

In Embodiment as shown in Figs. 1 and 2, the system in which the round edge knife disks 8 are directly transferred to the storage rack 5 to slitter stand rotation axes 3 and vice versa by the robotic hand 6 is explained as an example. However, the present invention is not limited to this configuration, and the round edge knife disks 8 are transferred via the temporary putting shaft between the storage rack 5 and slitter stand rotation axes 3.

Figs. 7 and 8 show a middle state in which the temporary putting shaft moves forward to the slitter side for changing the cutting edges with the bearing 2 of the anti-driving side being removed from the slitter stand rotation axes 3. The guide sleeve 4 having substantially the same internal diameter as the round edge knife disks 8, and the clamping mechanism 55 for automatically clamping the round edge knife disks 8 located on the end of anti-driving side of the slitter stand rotation axes 3 are provided on the driving side of the slitter stand rotation axes 3. A hydraulic cylinder 56 for reciprocating the clamping mechanism 55 in axial direction is provided on the end of the driving side in which the slitter stand rotation axes 3 are turning. A bearing 57 is engaged with the slitter stand rotation axes 3 on the anti-driving side of the round edge knife disks 8 in such a manner as the round edge knife disks 8. The bearing 57 is engaged with a bearing stand 2.

Although not shown in figures, the storage rack for the round edge knife disks 8 and general-purpose handling robot are provided at periphery of the slitter in the same manner as the above-mentioned Embodiment. The robotic hand having three claws, for example, is provided at the end of arm of the general-purpose handling robot which is capable of handling the round edge knife disks 8.

The round edge knife disks 8 are transferred from the above-mentioned robot to the temporary putting shaft 41 as shown in Fig. 1. There are four temporary putting shafts 41 which are provided for upper new cutting edges, lower new cutting edges, upper old cutting edges and lower old cutting edges, however, only one shaft is shown in Figs. 7 and 8. A delivery part 43 having grooves in which three claws, for example, of the robotic hand are moved is provided at the end of the temporary putting shaft 41. The four temporary putting shafts 41 respectively move forward to connect to the slitter stand rotation axes 3 and move backward to the receiving position of the robot, and include a pusher 7 for moving the round edge knife disks between the slitter stand rotation axes 3.

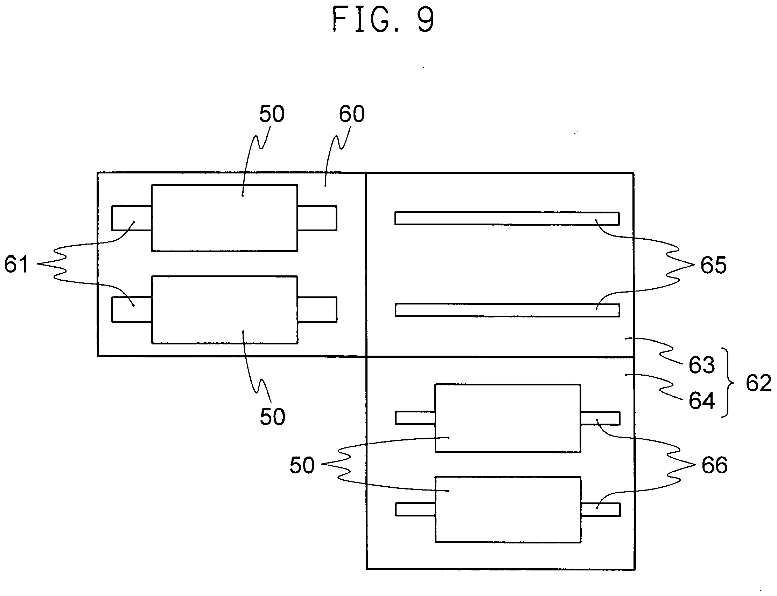

As shown in Fig. 9, a blade changing equipment 62 for the slitter 60 wherein, for example, the upper and lower slitter stand rotation axes are provided with the above-mentioned slitter cutter set 50 composed of a temporary putting equipment 63 including upper and lower receipt horizontal axes 65 and a receipt equipment 64 including upper and lower lateral temporary axes 66. The diameter of the receipt axes 65 and temporary putting axes 66 is set so as to be smaller than the diameter of the upper and lower slitter stand rotation axes 61, the slitter cutter set 50 are easier to be transferred to the receipt axes 65 and temporary putting axes 66.

The old slitter cutter set 50 provided on the slitter stand rotation axes 61 is detached by a detaching device such as the hydraulic cylinder not shown in figures, and can be received by the upper and lower receiving lateral axes 65 of the temporary putting equipment 63 as it is. The new slitter cutter set 50 including the predetermined number and order of cutting edges can be temporarily assembled to the upper and lower lateral temporary putting axes 66 of the receipt equipment 64 through employing a temporary assemble device such as the handling robot. After the upper and lower temporary putting axes 66 are connected to the upper and lower slitter stand rotation axes 61, the new slitter cutter set being temporarily assembled can be installed to the slitter stand rotation axes 61 through driving means such as the pusher.

It is possible to change the cutting edges of the slitter stand through employing one handling robot 6. However, with respect to reducing the time for changing cutting edges, it is preferable to use two handling robots, wherein one is only for changing the upper slitter stand rotation axes and the other is only for changing the lower slitter stand rotation axes, and respectively transfer the cutting edges to and back the upper slitter stand rotation axes and lower slitter stand rotation axes. Furthermore, through employing four handling robots, wherein one is only for transferring the round edge knife disks and round edge knife disks locating parts to the slitter stand rotation axes or temporary putting axes from the storage rack, and the other is transferring back to the slitter stand rotation axes or temporary putting axes from the storage rack, it is possible to carry out the assembly of the slitter cutter set being used in the next time and the operation of returning the slitter cutter set being previously used at the same time, and the time for changing the cutting edges can be further reduced.

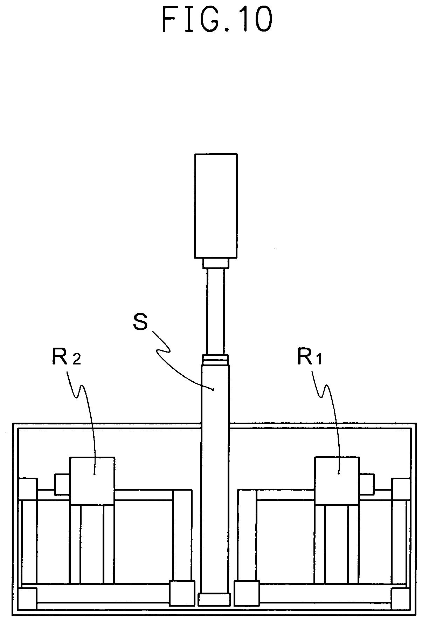

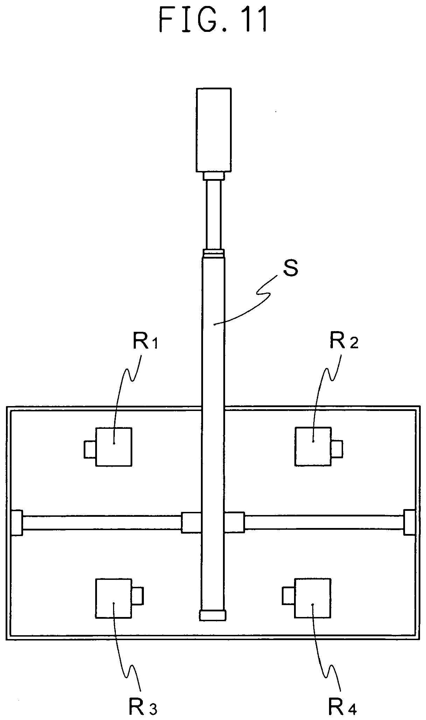

With respect to the disposing place for the above-mentioned handling robot 6 and storage rack 5, considering interference by respective handling robots and space for the storage rack, in the case of employing two handling robots, the handling robots R₁ and R₂ are preferably provided at both sides of the slitter S as shown in Fig. 10. In the case of employing four handling robots, the handling robots R₁, R₂, R₃ and R₄ are respectively provided at both sides of the slitter S with space therebetween as shown in Fig. 11. However, the disposing place of the present invention is not limited to the position as shown in Figs. 10 and 11, and the disposing place for the handling robot can be properly changed.

The temporary putting axes (shelf deviating axis or temporary storing device) which enables to greatly reduce the time for changing the cutting edges is explained in following.

When the slitter cutter set being previously used is returned to the storage rack from the upper and lower slitter stand rotation axes or upper and lower receipt axes, all of the round edge knife disks and round edge knife disks locating parts can be returned to the storage rack. However, it is efficient to use the round edge knife disks and round edge knife disks locating parts being used in the following time as well by not returning the round edge knife disks and round edge knife disks locating parts being used in the following, and storing them nearby the upper and lower slitter stand rotation axes or upper and lower temporary putting shafts for cutting edges. For this purpose, the storage rack which is able to temporarily store the number of the round edge knife disks and round edge knife disks locating parts being used in the following, or the temporary storing device having a lateral axis which is equivalent to the receiving axis and temporary putting shaft may be provided nearby the upper and lower slitter stand rotation axes or upper and lower temporary putting shafts for cutting edges.

In the case the temporary storing device is provided at the position substantially straight to the slitter stand rotation axes or receiving axis in such a manner it is movable backwards and forwards, the lateral axis of the temporary storing device contacts the axis of the receiving axis, thereby the round edge knife disks and round edge knife disks locating parts being used in the following can be transferred to the temporary storing device by parallel shifting through the pusher by without using the robot. When the lateral axis of the temporary storing device is released, the round edge knife disks and round edge knife disks locating parts not being used in the following can be returned to the storage rack by the handling robot. The effect is to reduce the frequency of transferring the round edge knife disks and round edge knife disks locating parts by the handling robot, and to greatly reduce the operation time of the handling robot, in other words, the time for assemble the cutting edges.

According to the present invention, it is possible to provide the device and method for changing cutting edges in the slitter stand which enable to replace the cutting edge axis of the slitter stand in a short time with a simple device arrangement. Accordingly, great laborsaving can be attained.

### INDUSTRIAL APPLICABILITY

The present invention can be utilized for the device for changing cutting edges and method for changing cutting edges for cutting edges of upper slitter stand rotation axes and lower slitter stand rotation axes of the slitter stand which shears a coiled form of the broad-wide material into a plurality of slit ribbons by catching the coiled form of the broad-wide material between the upper slitter stand rotation axes and lower slitter stand rotation axes through the slitter stand.

## Claims

1. A device for changing cutting edges in a slitter stand which installs round edge knife disks (8, 51) each having an internal diameter portion, an external diameter portion and a cutting edge and round edge knife disks locating parts (52) each having an internal diameter portion and an external diameter portion to upper slitter stand rotation axes (3; 61) and lower slitter stand rotation axes (3; 61) in a slitter stand, which shears a coiled form of a broad-wide material into a plurality of slit materials by catching the coiled form of the broad-wide material between the upper and lower slitter stand rotation axes (3; 61), comprising:
a custody warehouse (5) for storing various round edge knife disks (8, 51) and round edge knife disks locating parts (52) by being provided on said upper and lower slitter stand rotation axes (3; 61) in accordance with classified groups; and
a transfer device (6) wherein a plurality of said round edge knife disks (8) and/or round edge knife disks locating parts (52) are combined and held, and transferred to the upper slitter stand rotation axes (3; 61) and/or lower slitter stand rotation axes (3; 61) to be built in, and a plurality of said round edge knife disks (51) and/or round edge knife disks locating parts (52) are held with being combined, and transferred back to the custody warehouse (5) from the upper slitter stand rotation axes (3; 61) and/or lower slitter stand rotation axes (3; 61), and
**characterized in that** the custody warehouse (5) has a plurality of shelves for storing each of the round edge knife disks and/or round edge knife disks locating parts substantially vertically on at least a pair of rails whose opposing surfaces are tapered such that the interval of the opposing surfaces become wider as they are close to upward,
the transfer device (6) comprises a robotic hand (7) adapted to hold a plurality of the round edge knife disks (8, 51) and round edge knife disks locating parts (52) by holding their internal diameter portion by at least three places in a balanced manner, and an articulated robot arm (6a), which is able to transfer said round edge knife disks (8, 51) and round edge knife disks locating parts (52) to a predetermined position from the custody warehouse (5),
the robotic hand (7) is adapted to enter the internal diameter portion of the round edge knife disks and/or round edge knife disks locating parts stored substantially vertically and has a plurality of fingers configured to hold a plurality of round edge knife disks and/or round edge knife disks locating parts at one time, and
the robotic hand (7) is configured to hold the round edge knife disks and/or round edge knife disks locating parts one after another from the plurality of shelves in accordance with a schedule of installation of the round edge knife disks and/or round edge knife disks locating parts.

2. A device for changing cutting edges in a slitter stand of claim 1, further comprising:
a temporary assemble device for temporarily assembling said round edge knife disks (51) and round edge knife disks locating parts (52);
an insertion device for inserting said temporarily assembled round edge knife disks (51) and round edge knife disks locating parts (52) to the upper slitter stand rotation axes (3; 61) and/or lower slitter stand rotation axes (3; 61) from the temporary assemble device;
a detaching device for removing old cutting edges to be removed from said upper slitter stand rotation axes and/or lower slitter stand rotation axes; and
a receipt equipment (64) for receiving the old cutting edges to be removed.

3. A device for changing cutting edges in a slitter stand of Claim 2, wherein said temporary assemble device has more than two lateral temporary putting shafts (41), and a temporary putting equipment (63) having more than two receipt horizontal axes (65) is provided, wherein the lateral axes (65, 66) of the temporary assemble device and temporary putting equipment (63) are provided so as to be in axial direction to the upper and lower slitter stand rotation axes (3; 61) in the slitter stand, and are movable backwards and forwards and up and down in a direction of the slitter stand.

4. A device for changing cutting edges in a slitter stand of Claim 3, wherein diameter of said temporary putting shafts (41) and receipt axes (65, 66) is smaller than diameter of the upper and lower slitter stand rotation axes (61).

5. A device for changing cutting edges in a slitter stand of any one of claims 2 to 4, further comprising a temporary storing device (5) for temporarily storing the round edge knife disks (8) and/or round edge knife disks locating parts (52) to be removed from said receipt equipment (64).

6. A device for changing cutting edges in a slitter stand of any one of claims 2 to 5, wherein said round edge knife disks locating parts (52) comprise a plurality of spacers (53).

7. A device for changing cutting edges in a slitter stand of Claim 6, wherein said round edge knife disks locating parts (52) further comprise at least one cushioning material (54) having a hollowcyrindrical shape and provided on the spacers.

8. A device for changing cutting edges in a slitter stand of Claim 7, wherein said cushioning material (54) is fixed in such a manner as to be integrated with the outside of said spacers (53).

9. A device for changing cutting edges in a slitter stand of any one of claims 1 to 8, wherein said transfer device (6) has a mechanism for preventing the round edge knife disks and/or round edge knife disks locating parts from dropping while being transferred.

10. A device for changing cutting edges in a slitter stand of any one of claims 1 to 9, wherein a clamping mechanism (55) for fixing said round edge knife disks (8) and round edge knife disks locating parts (52) to the upper and lower slitter stand rotation axes (3; 61) is provided on end opens of said upper and lower slitter stand rotation axes (3; 61).

11. A device for changing cutting edges in a slitter stand of any one of claims 1 to 10, further comprising a temporary storing device (5) for temporarily storing the round edge knife disks (8) and/or round edge knife disks locating parts (52) to be removed from said upper and lower slitter stand rotation axes (3; 61).

12. A method for changing cutting edges in a slitter stand which installs round edge knife disks (8, 51) each having an internal diameter portion, an external diameter portion and a cutting edge and round edge knife disks locating parts (52) each having an internal diameter portion and an external diameter portion to upper slitter stand rotation axes (3; 61) and lower slitter stand rotation axes (3; 61) in a slitter stand, which shears a coiled form of a broad-wide material into a plurality of slit materials by catching the coiled form of the broad-wide material between the upper and lower slitter stand rotation axes (3; 61), wherein
after releasing the fixation of said upper and lower slitter stand rotation axes (3; 61), a plurality of the round edge knife disks (51) and/or a plurality of round edge knife disks locating parts (52) to be removed are combined and transferred back to a custody warehouse (5), and a plurality of the round edge knife disks (51) and/or round edge knife disks locating parts (52) being composed of next cutting edges are combined in an order of assembly to be transferred and fixed to said slitter stand rotation axes (3; 61);and
**characterized in that** the custody warehouse (5) has a plurality of shelves for storing each of the round edge knife disks and/or round edge knife disks locating parts substantially vertically on at least a pair of rails whose opposing surfaces are tapered such that the interval of the opposing surfaces become wider as they are close to upward,
as the transfer device (6) it is used a robotic hand (7) to hold a plurality of the round edge knife disks (8) and round edge knife disks locating parts (52) by holding their internal diameter portion by at least three places in a balanced manner, and an articulated robot arm (6a) to transfer said round edge knife disks (8, 51) and round edge knife disks locating parts (52) to a predetermined position from the custody warehouse (5),
the robotic hand (7) is adapted to enter the internal diameter portion of the round edge knife disks and/or round edge knife disks locating parts stored substantially vertically and has a plurality of fingers configured to hold a plurality of round edge knife disks and/or round edge knife disks locating parts at one time, and
the robotic hand (7) is configured to hold the round edge knife disks and/or round edge knife disks locating parts one after another from the plurality of shelves in accordance with a schedule of installation of the round edge knife disks and/or round edge knife disks locating parts.

13. A method for changing cutting edges in a slitter stand of claim 12, wherein
when the round edge knife disks (51) and/or a plurality of round edge knife disks locating parts (52), which comprise the cutting edges being provided on said upper and lower slitter stand rotation axes (3; 61), are transferred to a temporary assemble device from the custody warehouse (5) by a transfer device (6), a plurality of the round edge knife disks (51) and round edge knife disks locating parts (52) are combined in an order of assembly and transferred to lateral temporary putting shafts (41) of the temporary assemble device, and after temporarily assembling the cutting edges, the receipt horizontal axes of a receipt equipment (64) are in contact with the upper slitter stand rotation axes (3; 61) and/or lower slitter stand rotation axes (3; 61), and the old cutting edges to be removed are transferred and evacuated after releasing the fixation of the cutting edges, and said temporary putting shafts (41) are then in contact with the upper slitter stand rotation axes (3; 61) and/or lower slitter stand rotation axes (3; 61), and said temporarily assembled cutting edges are inserted and fixed to said slitter stand rotation axes (3; 61).

14. A method for changing cutting edges in a slitter stand of Claim 13, wherein when spacers (53), which comprise said round edge knife disks locating parts (52), and cushioning material (54), which has a hollowcyrindrical shape and being provided on the spacers (53), are combined and transferred to the temporary assemble device from the custody warehouse (5) by the transfer device, combinations of cushioning material (54) to be required and spacers (53) are determined in advance, and after the spacers (53), which can be transferred at one time, are sequentially held inside the custody warehouse (5), predetermined cushioning material (54) is further provided and then transferred.

## Patentansprüche

1. Vorrichtung zum Austauschen von Schneidmessern in einer Längsschneidmaschine, die runde Schneidmesserscheiben (8, 51), die jeweils einen Innendurchmesserabschnitt, einen Außendurchmesserabschnitt und eine Schneidkante aufweisen, und runde Schneidmesserscheibenpositionierteile (52), die jeweils einen Innendurchmesserabschnitt und einen Außendurchmesserabschnitt aufweisen, an oberen Längsschneidmaschinenrotationsachsen (3, 61) und unteren Längsschneidmaschinenrotationsachsen (3, 61) in einer Längsschneidmaschine installiert, die eine gespulte Form eines breitweiten Materials in mehrere geschnittene Materialien durch Aufnehmen der gespulten Form des breitweiten Materials zwischen den oberen und unteren Längsschneidmaschinenrotationsachsen (3, 61) zerschneidet, mit:
einem Aufbewahrungslager (5) zum Lagern verschiedener runder Schneidmesserscheiben (8, 51) und runder Schneidmesserscheibenpositionierteile (52), die auf den oberen und unteren Längsschneidmaschinenrotationsachsen (3, 61) vorgesehen sind, entsprechend klassifizierter Gruppen, und
einer Transfervorrichtung (6), wobei mehrere der runden Schneidmesserscheiben (8) und/oder runden Schneidmesserscheibenpositionierteile (52) kombiniert und gehalten werden und zu den oberen Längsschneidmaschinenrotationsachsen (3, 61) und/oder unteren Längsschneidmaschinenrotationsachsen (3, 61) zum Einbau transferiert werden und mehrere der runden Schneidmesserscheiben (51) und/oder runden Schneidmesserscheibenpositionierteile (52) gehalten werden, wobei sie kombiniert werden, und von den oberen Längsschneidmaschinenrotationsachsen (3, 61) und/oder unteren Längsschneidmaschinenrotationsachsen (3, 61) zurück zu dem Aufbewahrungslager (5) transferiert werden, und
**gekennzeichnet dadurch, dass** das Aufbewahrungslager (5) mehrere Ablagen zum Speichern der runden Schneidmesserscheiben und/oder runden Schneidmesserscheibenpositionierteile in im Wesentlichen vertikaler Weise auf wenigstens einem Paar von Schienen aufweist, deren einander gegenüberliegenden Oberflächen derart abgeschrägt sind, dass das Intervall der einander gegenüberliegenden Oberflächen nach oben hin breiter wird,
die Transfervorrichtung (6) eine Roboterhand (7), die ausgestaltet ist, mehrere runde Schneidmesserscheiben (8, 51) und runde Schneidmesserscheibenpositionierteile (52) durch Halten ihrer Innendurchmesserabschnitte an wenigstens drei Stellen in einer abgestimmten Weise zu halten, und einen freibeweglichen Roboterarm (6a) aufweist, der dazu in der Lage ist, die runden Schneidmesserscheiben (8, 51) und runden Schneidmesserscheibenpositionierteile (52) von dem Aufbewahrungslager (5) zu einer vorbestimmten Position zu transferieren,
die Roboterhand (7) ausgestaltet ist, in den Innendurchmesserabschnitt der runden Schneidmesserscheiben und/oder runden Schneidmesserscheibenpositionierteile, die in im Wesentlichen vertikaler Weise gelagert werden, einzudringen, und mehrere Finger aufweist, die ausgestaltet sind, mehrere runde Schneidmesserscheiben und/oder runde Schneidmesserscheibenpositionierteile zur gleichen Zeit zu halten, und
die Roboterhand (7) ausgestaltet ist, die runden Schneidmesserscheiben und/oder runden Schneidmesserscheibenpositionierteile eines nach dem anderen von den mehreren Ablagen entsprechend einem Installationsplan der runden Schneidmesserscheiben und/oder runden Schneidmesserscheibenpositionierteile zu halten.

2. Vorrichtung zum Austauschen von Schneidmessern in einer Längsschneidmaschine nach Anspruch 1, ferner mit:
einer temporären Zusammenstellvorrichtung zum temporären Zusammenstellen der runden Schneidmesserscheiben (51) und runden Schneidmesserscheibenpositionierteile (52),
einer Einführvorrichtung zum Einführen der temporär zusammengestellten runden Schneidmesserscheiben (51) und runden Schneidmesserscheibenpositionierteile (52) auf die oberen Längsschneidmaschinenrotationsachsen (3, 61) und/oder unteren Längsschneidmaschinenrotationsachsen (3, 61) von der temporären Anordnungsvorrichtung,
einer Lösevorrichtung zum Entfernen zu entfernender alter Schneidmesser von den oberen Längsschneidmaschinenrotationsachsen und/oder unteren Längsschneidmaschinenrotationsachsen und
einer Empfangsausrüstung (64) zum Empfangen der zu entfernenden alten Schneidmesser.

3. Vorrichtung zum Austauschen von Schneidmessern in einer Längsschneidmaschine nach Anspruch 2, wobei die temporäre Zusammenstellvorrichtung mehr als zwei laterale temporäre Setzwellen (41) aufweist und eine temporäre Setzausrüstung (63) mit mehr als zwei horizontalen Empfangsachsen (65) vorgesehen ist, wobei die lateralen Achsen (65, 66) der temporären Zusammenstellvorrichtung und der temporären Setzausrüstung (63) so vorgesehen sind, dass sie sich in axialer Richtung der oberen und unteren Längsschneidmaschinenrotationsachsen (3, 61) in der Längsschneidmaschine befinden, und in einer Richtung der Längsschneidmaschine rückwärts und vorwärts und aufwärts und abwärts beweglich sind.

4. Vorrichtung zum Austauschen von Schneidmessern in einer Längsschneidmaschine nach Anspruch 3, wobei ein Durchmesser der temporären Setzwellen (41) und Empfangsachsen (65, 66) kleiner als ein Durchmesser der oberen und unteren Längsschneidmaschinenrotationsachsen (61) ist.

5. Vorrichtung zum Austauschen von Schneidmessern in einer Längsschneidmaschine nach einem der Ansprüche 2 bis 4, ferner mit einer temporären Lagervorrichtung (5) zum temporären Lagern der runden Schneidmesserscheiben (8) und/oder runden Schneidmesserscheibenpositionierteile (52), die von der Empfangsausrüstung (64) zu entfernen sind.

6. Vorrichtung zum Austauschen von Schneidmessern in einer Längsschneidmaschine nach einem der Ansprüche 2 bis 5, wobei die runden Schneidmesserscheibenpositionierteile (52) mehrere Abstandshalter (53) umfassen.

7. Vorrichtung zum Austauschen von Schneidmessern in einer Längsschneidmaschine nach Anspruch 6, wobei die runden Schneidmesserscheibenpositionierteile (52) ferner wenigstens ein Dämpfungsmaterial (54) umfassen, das eine hohlzylindrische Form aufweist und auf den Abstandshaltern vorgesehen ist.

8. Vorrichtung zum Austauschen von Schneidmessern in einer Längsschneidmaschine nach Anspruch 7, wobei das Dämpfungsmaterial (54) in einer Weise fixiert ist, dass es mit der Außenseite der Abstandshalter (53) integriert ist.

9. Vorrichtung zum Austauschen von Schneidmessern in einer Längsschneidmaschine nach einem der Ansprüche 1 bis 8, wobei die Transfervorrichtung (6) einen Mechanismus aufweist, der dazu dient, die runden Schneidmesserscheiben und/oder runden Schneidmesserscheibenpositionierteile während des Transferierens davon abzuhalten, fallengelassen zu werden.

10. Vorrichtung zum Austauschen von Schneidmessern in einer Längsschneidmaschine nach einem der Ansprüche 1 bis 9, wobei ein Einspannmechanismus (55) zum Fixieren der runden Schneidmesserscheiben (8) und runden Schneidmesserscheibenpositionierteile (52) an den oberen und unteren Längsschneidmaschinenrotationsachsen (3, 61) an offenen Enden der oberen und unteren Längsschneidmaschinenrotationsachsen (3, 61) vorgesehen ist.

11. Vorrichtung zum Austauschen von Schneidmessern in einer Längsschneidmaschine nach einem der Ansprüche 1 bis 10, ferner mit einer temporären Lagervorrichtung (5) zum temporären Lagern der runden Schneidmesserscheiben (8) und/oder runden Schneidmesserscheibenpositionierteile (52), die von den oberen und unteren Längsschneidmaschinenrotationsachsen (3, 61) zu entfernen sind.

12. Verfahren zum Austauschen von Schneidmessern in einer Längsschneidmaschine, das runde Schneidmesserscheiben (8, 51), die einen Innendurchmesserabschnitt, einen Außendurchmesserabschnitt und eine Schneidkante aufweisen, und runde Schneidmesserscheibenpositionierteile (52), die einen Innendurchmesserabschnitt und einen Außendurchmesserabschnitt aufweisen, an oberen Längsschneidmaschinenrotationsachsen (3, 61) und unteren Längsschneidmaschinenrotationsachsen (3, 61) in einer Längsschneidmaschine installiert, die eine gespulte Form eines breitweiten Materials in mehrere geschnittene Materialien durch Aufnehmen der gespulten Form des breitweiten Materials zwischen den oberen und unteren Längsschneidmaschinenrotationsachsen (3, 61) zerschneidet, wobei
nach Lösen der Fixierung der oberen und unteren Längsschneidmaschinenrotationsachsen (3, 61) mehrere der runden Schneidmesserscheiben (51) und/oder runde Schneidmesserscheibenpositionierteile (52), die zu entfernen sind, kombiniert werden und zurück in ein Aufbewahrungslager (5) transferiert werden, und mehrere der runden Schneidmesserscheiben (51) und/oder runden Schneidmesserscheibenpositionierteile (52), die aus den nächsten Schneidmessern gebildet werden, in einer Zusammenstellreihenfolge kombiniert werden, um transferiert zu werden und
**gekennzeichnet dadurch, dass** das Aufbewahrungslager (5) mehrere Ablagen zum Speichern der runden Schneidmesserscheiben und/oder runden Schneidmesserscheibenpositionierteile in im Wesentlichen vertikaler Weise auf wenigstens einem Paar von Schienen aufweist, deren einander gegenüberliegenden Oberflächen derart abgeschrägt sind, dass das Intervall der einander gegenüberliegenden Oberflächen nach oben hin breiter wird,
als Transfervorrichtung (6) eine Roboterhand (7) zum Halten mehrerer runder Schneidmesserscheiben (8, 51) und runder Schneidmesserscheibenpositionierteile (52) durch Halten ihrer Innendurchmesserabschnitte an wenigstens drei Stellen in einer abgestimmten Weise, und ein freibeweglichen Roboterarm (6a) zum Transferieren der runden Schneidmesserscheiben (8, 51) und runden Schneidmesserscheibenpositionierteile (52) von dem Aufbewahrungslager (5) zu einer vorbestimmten Position verwendet werden,
die Roboterhand (7) ausgestaltet ist, in den Innendurchmesserabschnitt der runden Schneidmesserscheiben und/oder runden Schneidmesserscheibenpositionierteile, die in im Wesentlichen vertikaler Weise gelagert werden, einzudringen, und mehrere Finger aufweist, die ausgestaltet sind, mehrere runde Schneidmesserscheiben und/oder runde Schneidmesserscheibenpositionierteile zur gleichen Zeit zu halten, und
die Roboterhand (7) ausgestaltet ist, die runden Schneidmesserscheiben und/oder runden Schneidmesserscheibenpositionierteile eines nach dem anderen von den mehreren Ablagen entsprechend einem Installationsplan der runden Schneidmesserscheiben und/oder runden Schneidmesserscheibenpositionierteile zu halten.

13. Verfahren zum Austauschen von Schneidmessern in einer Längsschneidmaschine nach Anspruch 12, wobei
wenn die runden Schneidmesserscheiben (51) und/oder mehreren runden Schneidmesserscheibenpositionierteile (52), die die Schneidmesser umfassen, die auf den oberen und unteren Längsschneidmaschinenrotationsachsen (3, 61) vorgesehen sind, durch eine Transfervorrichtung (6) von dem Aufbewahrungslager (5) zu einer temporären Zusammenstellvorrichtung transferiert werden, mehrere der runden Schneidmesserscheiben (51) und runden Schneidmesserscheibenpositionierteile (52) in einer Zusammenstellreihenfolge kombiniert sind und zu lateralen temporären Setzwellen (41) der temporären Zusammenstellvorrichtung transferiert sind und nach einem temporären Zusammenstellen der Schneidmesser die horizontalen Aufnahmeachsen einer Aufnahmeausrüstung (64) mit den oberen Längsschneidmaschinenrotationsachsen (3, 61) und/oder unteren Längsschneidmaschinenrotationsachsen (3, 61) in Kontakt sind und die alten Schneidmesser, die zu entfernen sind, transferiert werden und nach Lösen der Fixierung der Schneidmesser evakuiert werden und die temporären Setzwellen (41) dann in Kontakt mit den oberen Längsschneidmaschinenrotationsachsen (3, 61) und/oder unteren Längsschneidmaschinenrotationsachsen (3, 61) sind und die temporär zusammengestellten Schneidmesser dann auf die Längsschneidmaschinenrotationsachsen (3, 61) aufgebracht und daran fixiert werden.

14. Verfahren zum Austauschen von Schneidmessern in einer Längsschneidmaschine nach Anspruch 13, wobei, wenn Abstandshalter (53), die die runden Schneidmesserscheibenpositionierteile (52) umfassen, und Dämpfungsmaterial (54), das eine hohe zylindrische Form aufweist und auf den Abstandshaltern (53) vorgesehen ist, kombiniert und durch die Transfervorrichtung von dem Aufbewahrungslager (5)zu der temporären Zusammenstellvorrichtung transferiert werden, Kombinationen des Dämpfungsmaterials (54), das benötigt wird, und der Abstandshaltern (53) vorabbestimmt werden, und nachdem die Abstandshalter (53), die gleichzeitig transferiert werden können, sequenziell innerhalb des Aufbewahrungslagers (5) gehalten werden, wobei vorbestimmtes Dämpfungsmaterial (54) ferner bereitgestellt und dann transferiert wird.

## Revendications

1. Dispositif pour changer des bords tranchants dans un support de dispositif de découpe qui installe des disques à couteaux à bord rond (8, 51) ayant chacun une partie de diamètre interne, une partie de diamètre externe et un bord tranchant, et des pièces de positionnement (52) de disques à couteaux à bord rond ayant chacun une partie de diamètre interne et une partie de diamètre externe sur des axes de rotation de support de dispositif de découpe supérieurs (3 ; 61) et des axes de rotation de support de dispositif de découpe inférieurs (3 ; 61) dans un support de dispositif de découpe, cisaillant une forme bobinée d'un matériau de grande largeur en une pluralité de matériaux fendus en attrapant la forme bobinée du matériau de grande entre les axes de rotation de support de dispositif de découpe supérieurs et inférieurs (3 ; 61), comprenant :
un magasin de conservation (5) pour stocker divers disques à couteaux à bord rond (8, 51) et des pièces de positionnement (52) de disques à couteaux à bord rond en étant fournis sur lesdits axes de rotation de support de dispositif de découpe supérieurs et inférieurs (3 ; 61) selon des groupes classifiés ; et
un dispositif de transfert (6) dans lequel une pluralité desdits disques à couteaux à bord rond (8) et/ou des pièces de positionnement (52) de disques à couteaux à bord rond sont combinés et supportés, et transférés aux axes de rotation de support de dispositif de découpe supérieurs (3 ; 61) et/ou axes de rotation de support de dispositif de découpe inférieurs (3 ; 61) pour y être montés, et une pluralité desdits disques à couteaux à bord rond (51) et/ou des pièces de positionnement (52) de disques à couteaux à bord rond sont supportés en étant combinés, et transférés en retour vers le magasin de conservation (5) à partir des axes de rotation de support de dispositif de découpe supérieurs (3 ; 61) et/ou des axes de rotation de support de dispositif de découpe inférieurs (3 ; 61), et
**caractérisé en ce que** le magasin de conservation (5) comporte une pluralité d'étagères pour stocker chacun des disques à couteaux à bord rond et/ou chacune des pièces de positionnement de disques à couteaux à bord rond sensiblement verticalement sur au moins une paire de rails dont des surfaces opposées sont effilées de telle sorte que l'intervalle des surfaces opposées devient plus large en se rapprochant du haut,
le dispositif de transfert (6) comprend une main robotisée (7) adaptée pour supporter une pluralité de disques à couteaux à bord rond (8, 51) et pièces de positionnement (52) de disques à couteaux à bord rond en supportant leur partie de diamètre interne en au moins trois endroits de manière équilibrée, et un bras de robot articulé (6a), qui est capable de transférer lesdits disques à couteaux à bord rond (8, 51) et lesdites pièces de positionnement de disques à couteaux à bord rond (52) jusque dans une position prédéterminée à partir magasin de conservation (5),
la main robotisée (7) est adaptée pour pénétrer dans la partie de diamètre interne des disques à couteaux à bord rond et/ou des pièces de positionnement de disques à couteaux à bord rond stockés sensiblement verticalement et comporte une pluralité de doigts configurés pour supporter une pluralité de disques à couteaux à bord rond et/ou de pièces de positionnement de disques à couteaux à bord rond en même temps, et
la main robotisée (7) est configurée pour supporter les disques à couteaux à bord rond et/ou les pièces de positionnement de disques à couteaux à bord rond à la suite parmi la pluralité d'étagères selon un programme d'installation des disques à couteaux à bord rond et/ou des pièces de positionnement de disques à couteaux à bord rond.

2. Dispositif pour changer des bords tranchants dans un support de dispositif de découpe selon la revendication 1, comprenant en outre :
un dispositif d'assemblage temporaire pour assembler temporairement lesdits disques à couteaux à bord rond (51) et les pièces de positionnement (52) de disques à couteaux à bord rond ;
un dispositif d'insertion pour insérer lesdits disques à couteaux à bord rond (51) et lesdites pièces de positionnement (52) de disques à couteaux à bord rond temporairement assemblés sur les axes de rotation de support de dispositif de découpe supérieurs (3 ; 61) et/ou les axes de rotation de support de dispositif de découpe inférieurs (3 ; 61) à partir du dispositif d'assemblage temporaire ;
un dispositif de détachement pour retirer les anciens bords tranchants devant être retirés desdits axes de rotation de support de dispositif de découpe supérieure et/ou desdits axes de rotation de support de dispositif de découpe inférieurs ; et
un équipement de réception (64) pour recevoir les anciens bords tranchants devant être enlevés.

3. Dispositif pour changer des bords tranchants dans un support de dispositif de découpe selon la revendication 2, dans lequel ledit dispositif d'assemblage temporaire comporte plus de deux arbres de mise en place temporaire (41), et un équipement de mise en place temporaire (63) comportant plus de deux axes horizontaux de réception (65) est fourni, dans lequel les axes latéraux (65, 66) du dispositif d'assemblage temporaire et de l'équipement de mise en place temporaire (63) sont fournis de manière à être dans la direction axiale par rapport aux axes de rotation de support de dispositif de découpe supérieurs et inférieurs (3 ; 61), et sont mobiles vers l'arrière et vers l'avant et de haut en bas dans une direction du support de dispositif de découpe.

4. Dispositif pour changer des bords tranchants dans un support de dispositif de découpe selon la revendication 3, dans lequel le diamètre des arbres de mise en place temporaire (41) et des axes de réception (65, 66) est inférieur au diamètre des axes de rotation de support de dispositif de découpe supérieur et inférieur (61).

5. Dispositif pour changer des bords tranchants dans un support de dispositif de découpe selon l'une quelconque des revendications 2 à 4, comprenant en outre un dispositif de stockage temporaire (5) pour stocker temporairement les disques à couteaux à bord rond (8) et/ou les pièces de positionnement (52) de disques à couteaux à bord rond à retirer dudit équipement de réception (64).

6. Dispositif pour changer des bords tranchants dans un support de dispositif de découpe selon l'une quelconque des revendications 2 à 5, dans lequel lesdites disques à couteaux à bord rond (52) comprennent une pluralité d'entretoises (53).

7. Dispositif pour changer des bords tranchants dans un support de dispositif de découpe selon la revendication 6, dans lequel lesdites pièces de positionnement de disques à couteaux à bord rond comprennent en outre au moins un matériau de rembourrage (54) ayant une forme cylindrique creuse et prévu sur les entretoises.

8. Dispositif pour changer des bords tranchants dans un support de dispositif de découpe selon la revendication 7, dans lequel ledit matériau de rembourrage (54) est fixé de manière à être intégré à l'extérieur desdites entretoises (53).

9. Dispositif pour changer des bords tranchants dans un support de dispositif de découpe selon l'une quelconque des revendications 1 à 8, dans lequel ledit dispositif de transfert (6) comporte un mécanisme pour empêcher les disques à couteaux à bord rond et/ou les pièces de positionnement (52) de disques à couteaux à bord rond de chuter pendant qu'ils sont transférés.

10. Dispositif pour changer des bords tranchants dans un support de dispositif de découpe selon l'une quelconque des revendications 1 à 9, dans lequel un mécanisme de serrage (55) pour fixer lesdits disques à couteaux à bord rond (8) et lesdites pièces de positionnement (52) de disques à couteaux à bord rond sur les axes de rotation de support de dispositif de découpe supérieurs et inférieurs (3 ; 61) sont prévus sur les ouvertures d'extrémité desdits axes de rotation de support de dispositif de découpe supérieurs et inférieurs (3 ; 61).

11. Dispositif pour changer les bords tranchants dans un support de dispositif de découpe selon l'une quelconque des revendications 1 à 10, comprenant en outre un dispositif de stockage temporaire (5) pour stocker temporairement les disques à couteaux à bord rond (8) et/ou les pièces de positionnement (52) de disques à couteaux à bord rond à retirer desdits axes de rotation de support de dispositif de découpe supérieurs et inférieurs (3 ; 61).

12. Méthode pour changer des bords tranchants dans un support de dispositif de découpe qui installe des disques à couteaux à bords ronds (8, 51) ayant chacun une partie de diamètre interne, une partie de diamètre externe et des pièces de positionnement (52) de disques à couteaux à bord rond ayant chacune une partie de diamètre interne et une partie de diamètre externe sur des axes de rotation de support de dispositif de découpe supérieurs (3 ; 61) et des axes de rotation de support de dispositif de découpe inférieurs (3 ; 61) dans un support de dispositif de découpe, qui cisaille une forme bobinée d'un matériau de grande largeur en une pluralité des matériaux de la combinaison en attrapant la forme bobinée du matériau de grande largeur entre les axes de rotation du support de dispositif de découpe supérieurs et inférieurs (3 ; 61), dans laquelle
après avoir libéré la fixation desdits axes de rotation de support de dispositif de découpe supérieurs et inférieurs (3 ; 61), une pluralité des disques à couteaux à bord rond (51) et/ou une pluralité de pièces de positionnement de disques à couteaux à bord rond à retirer sont combinés et transférés en retour à un magasin de conservation (5), et une pluralité disques à couteaux à bord rond (51) et/ou de pièces de positionnement (52) de disques à couteaux à bord rond composés des bords tranchants suivants sont combinés dans un ordre d'assemblage pour être transférés et fixés auxdits axes de rotation de support de dispositif de découpe (3 ; 61) ; et
**caractérisée en ce que** le magasin de conservation (5) comporte une pluralité d'étagères pour stocker chacun des disques à couteaux à bord rond et/ou des pièces de positionnement de disques à couteaux à bord rond sensiblement verticalement sur au moins une paire de rails dont des surfaces opposées sont effilées de telle sorte que l'intervalle des surfaces opposées devient plus large en se rapprochant du haut,
une main robotisée (7) est utilisée en tant que dispositif de transfert (6) pour supporter une pluralité de disques à couteaux à bord rond (8) et de pièces de positionnement (52) de disques à couteaux à bord rond en supportant leur partie de diamètre interne en au moins trois endroits d'une manière équilibrée, ainsi qu'un bras de robot articulé (6a) pour transférer lesdits disques à couteaux à bord rond (8, 51) et lesdites pièces de positionnement (52) de disques à couteaux à bord rond jusque dans une position prédéterminée à partir du magasin de conservation (5),
la main robotisée (7) est adaptée pour pénétrer dans la partie de diamètre interne des disques à couteaux à bord rond et/ou des pièces de positionnement de disques à couteaux à bord rond stockés sensiblement verticalement et comporte une pluralité de doigts configurés pour supporter une pluralité de disques à couteaux à bord rond et/ou de pièces de positionnement de disques à couteaux à bord rond en même temps, et
la main robotisée (7) est configurée pour supporter les disques à couteaux à bord rond et/ou les pièces de positionnement de disques à couteaux à bord rond à la suite parmi la pluralité d'étagères selon un programme d'installation des disques à couteaux à bord rond et/ou des pièces de positionnement de disques à couteaux à bord rond.

13. Méthode pour changer des bords tranchants dans un support de dispositif de découpe selon la revendication 12, dans laquelle
lorsque les disques à couteaux à bord rond (51) et/ou une pluralité de pièces de positionnement (52) de disques à couteaux à bord rond, qui comprennent les bords tranchants prévus sur lesdits axes de rotation de support de dispositif de découpe supérieurs et inférieurs (3 ; 61), sont transférés vers un dispositif d'assemblage temporaire à partir du magasin de conservation (5) par un dispositif de transfert (6), une pluralité de disques à couteaux à bord rond (51) et de pièces de positionnement (52) de disques à couteaux à bord rond sont combinés dans un ordre d'assemblage et transférés vers des arbres de mise en place temporaires latéraux (41) du dispositif d'assemblage temporaire, et après l'assemblage temporaire des bords tranchants, les axes horizontaux de réception d'un équipement de réception (64) sont en contact avec les axes de rotation de support de dispositif de découpe supérieurs (3 ; 61) et/ou les axes de rotation de support de dispositif de découpe inférieurs (3 ; 61) et les anciens bords tranchants à enlever sont transférés et évacués après libération de la fixation des bords tranchants, et lesdits arbres de mise en place temporaires (41) sont alors en contact avec les axes de rotation support de dispositif de coupe supérieurs (3 ; 61) et/ou les axes de rotation de support de dispositif de découpe inférieurs (3 ; 61), et lesdits bords tranchants assemblés temporairement sont insérés et fixés auxdits axes de rotation de support de dispositif de découpe (3 ; 61).

14. Méthode pour changer des bords tranchants dans un support de dispositif de découpe selon la revendication 13, dans laquelle lorsque des entretoises (53), qui comprennent lesdites pièces de positionnement (52) de disques à couteaux à bord rond et un matériau de rembourrage (54), qui a une forme cylindrique creuse et qui est prévu sur les entretoises (53), sont combinées et transférées au dispositif d'assemblage temporaire depuis le magasin de conservation (5) par le dispositif de transfert, des combinaisons de matériau de rembourrage (54) requises et des entretoises (53) sont déterminées à l'avance, et après que les entretoises (53), qui peuvent être transférées en une fois, sont supportées séquentiellement à l'intérieur du magasin de conservation (5), un matériau de rembourrage prédéterminé (54) est en outre fourni puis transféré.
